# EUROPÄISCHE PATENTSCHRIFT

(11) **EP 3 733 970 B1**
(45) Veröffentlichungstag und Bekanntmachung des Hinweises auf die Patenterteilung: **17.03.2021**
(21) Anmeldenummer: 19171727.1
(22) Anmeldetag: 30.04.2019
(51) Int. Cl.: E01C 19/48, H04L 29/08, G06F 21/74, G06F 21/85, H04W 12/08, H04L 29/06

(54) **STRASSENFERTIGER ODER BESCHICKERFAHRZEUG MIT EINER FIREWALL**
ROAD FINISHER OR FEEDER WITH A FIREWALL
FINISSEUSE DE ROUTE OU CHARGEUR AVEC UN PARE-FEU

(43) Veröffentlichungstag der Anmeldung: 04.11.2020
(73) Patentinhaber: Joseph Vögele AG, 67067 Ludwigshafen (DE)
(72) Erfinder: EUL, Achim, 68305 Mannheim (DE); DELIUS, Henning, 67480 Edenkoben (DE); ERDMANN, Markus, 69126 Heidelberg (DE)
(74) Vertreter: Grünecker Patent- und Rechtsanwälte PartG mbB

(56) Entgegenhaltungen:
- EP-A1- 3 075 909
- EP-A1- 3 214 223
- DE-A1-102004 033 624
- DE-A1-102016 114 046

## Beschreibung

Die Erfindung betrifft das Gebiet der Straßenfertiger und der Beschickerfahrzeuge für Straßenfertiger.

In den letzten Jahren hat sich im Zuge einer Automatisierungs- und Digitalisierungstendenz im Straßenbau die Komplexität von in Straßenfertigern und Beschickerfahrzeugen für Straßenfertiger eingesetzten Computersystemen drastisch erhöht. Derzeit eingesetzte komplexe Computersysteme nehmen sowohl im Bereich der internen Steuerung des Straßenfertigers oder des Beschickerfahrzeugs anzusiedelnde Aufgaben wahr, beispielsweise Aufgaben im Bereich einer Maschinensteuerung und -überwachung, als auch Aufgaben, die vornehmlich in den Bereich der Datenkommunikation mit externen Systemen oder einem Bediener anzusiedeln sind. Beispielsweise ist aus der EP 3 214 223 A1 ein Straßenfertiger mit einer seitlich an dem Chassis oder dem Gutbunker des Straßenfertigers vorgesehenen Bedieneinheit bekannt, die eine Schnittstelle zum unidirektionalen oder bidirektionalen elektronischen Datenaustausch mit dem Straßenfertiger umfasst.

Um die vielfältigen computerisierten Elemente, die an einem Straßenfertiger oder an einem Beschickerfahrzeug vorgesehen sein können, untereinander und mit einem Zentralrechner koordinieren zu können, kann ein Netzwerk, insbesondere ein Ethernet-Netzwerk eingesetzt werden. Somit lässt sich eine Kommunikation zuverlässig und auf bekannten Standards basierend implementieren. Das Vernetzen unterschiedlicher Funktionen und Komponenten kann sich jedoch nachteilig auf die Systemsicherheit auswirken.

Es ist Aufgabe der Erfindung, einen Straßenfertiger oder ein Beschickerfahrzeug für einen Straßenfertiger mit trotz eines hohen Computerisierungsgrades guten Sicherheitseigenschaften bereitzustellen, wobei dies mit möglichst einfachen Mitteln erreicht werden soll.

Diese Aufgabe wird durch den Gegenstand von Anspruch 1 gelöst. Die abhängigen Ansprüche geben vorteilhafte Ausführungsformen der Erfindung an.

Erfindungsgemäß wird ein Baufahrzeug bereitgestellt, bei dem es sich um einen Straßenfertiger oder um ein Beschickerfahrzeug für einen Straßenfertiger handelt. Das Baufahrzeug umfasst einen Fahrantrieb zum Bereitstellen einer Fahrfunktion des Baufahrzeugs. Zudem umfasst das Baufahrzeug einen internen Netzwerkbereich, der eine Recheneinheit zur Steuerung eines Betriebs des Baufahrzeugs umfasst, und einen externen Netzwerkbereich, der in Datenkommunikationsverbindung mit dem internen Netzwerkbereich steht. Es sei darauf hingewiesen, dass sowohl der interne Netzwerkbereich als auch der externe Netzwerkbereich an dem Baufahrzeug implementiert sind. Die Bezeichnungen "interner Netzwerkbereich" und "externer Netzwerkbereich" werden zur leichteren Lesbarkeit verwendet, könnten aber ohne Weiteres durch die Bezeichnungen "erster Netzwerkbereich" und "zweiter Netzwerkbereich" ersetzt werden.

Das Baufahrzeug umfasst des Weiteren eine Firewall, die dazu konfiguriert ist, eine Datenkommunikation von dem externen Netzwerkbereich des Baufahrzeugs an den internen Netzwerkbereich des Baufahrzeugs zu überwachen. Die Firewall weist einen eigenen Prozessor und ein eigenes Betriebssystem auf. Insbesondere kann die Firewall eine eigene Software und/oder eine eigene Firmware umfassen.

Durch das Vorsehen der Firewall wird auf dem Baufahrzeug eine Netzwerkseparation zwischen dem internen und dem externen Netzwerkbereich erreicht. Der interne und der externe Netzwerkbereich werden durch die Firewall klar und eindeutig getrennt. Die Firewall kann den internen Netzwerkbereich des Baufahrzeugs vor unerwünschten Netzwerkzugriffen aus dem externen Netzwerkbereich schützen.

Basierend auf der Netzwerkseparation lassen sich beispielsweise besonders sicherheitskritische Funktionen des Baufahrzeugs und Funktionen, auf die kein Zugriff von außen erforderlich ist, in dem internen Netzwerkbereich realisieren, während nicht sicherheitskritische Funktionen und Einrichtungen zur Datenkommunikation mit externen Netzwerken, Geräten oder Speichermedien in dem externen Netzwerkbereich vorgesehen sein können.

Da die Firewall einen eigenen Prozessor und ein eigenes Betriebssystem aufweist, ist eine unabhängige Sicherheitsebene zwischen dem externen und dem internen Netzwerkbereich vorhanden. Dies ist gegenüber Schutzmechanismen, die auf der Recheneinheit zur Steuerung des Baufahrzeugs implementiert sind, vorteilhaft, da unsichere Daten blockiert werden können, bevor sie den internen Netzwerkbereich, insbesondere eine Netzwerkschnittstelle der Recheneinheit, erreichen. Um gefiltert zu werden, müssen Daten so nicht zunächst in die Recheneinheit gelangen, was eine Gefährdung der Recheneinheit bedeuten könnte.

Vorzugsweise sind der interne Netzwerkbereich und der externe Netzwerkbereich zumindest teilweise als Ethernet-Netzwerke ausgebildet. Es wäre auch denkbar, dass zumindest Teile des internen Netzwerkbereichs und/oder Teile des externen Netzwerkbereichs über drahtlose Verbindungen, beispielsweise über WLAN, realisiert sind.

Vorzugsweise ist der externe Netzwerkbereich an einen Eingang der Firewall angeschlossen. So wird sichergestellt, dass Daten aus dem externen Netzwerkbereich zunächst die Firewall passieren müssen, bevor sie in den internen Netzwerkbereich gelangen.

Ein Ausgang der Firewall kann mit einer Netzwerkschnittstelle der Recheneinheit verbunden sein. Durch die Firewall überprüfte Daten aus dem externen Netzwerkbereich können dann direkt der Recheneinheit zur Weiterverarbeitung übergeben werden.

Es wäre auch denkbar, dass der Ausgang der Firewall mit einem Switch verbunden ist, der Teil des internen Netzwerkbereichs ist. Der Switch kann die Daten aus dem externen Netzwerkbereich geeignet an entsprechende Komponenten des internen Netzwerkbereichs weiterleiten. Insbesondere kann der Switch mit einer Netzwerkschnittstelle der Recheneinheit verbunden sein und so Daten aus dem externen Netzwerkbereich an dei Recheneinheit weitergeben.

Vorzugsweise ist zudem ein internes Baufahrzeug-Netzwerk, das Teil des internen Netzwerkbereichs ist, mit dem Switch verbunden. Die einzelnen Teile des internen Netzwerkbereichs lassen sich über den Switch vor einer Verbindung mit der Recheneinheit zusammenführen. Hierdurch können Netzwerkschnittstellen an der Recheneinheit eingespart werden. Beispielsweise kann eine einzige Netzwerkschnittstelle an der Recheneinheit ausreichend sein, die insbesondere mit dem Switch verbunden ist.

Der interne Netzwerkbereich des Baufahrzeugs kann eine Maschinensteuerung des Baufahrzeugs umfassen. Die Maschinensteuerung als besonders sicherheitskritisches Element des Baufahrzeugs ist somit über die Firewall geschützt. Die Maschinensteuerung kann insbesondere zumindest teilweise auf der Recheneinheit implementiert sein.

Der externe Netzwerkbereich des Baufahrzeugs kann beispielsweise eine Schnittstelle zur Datenkommunikation mit einem externen Speichermedium, eine Schnittstelle zur Datenkommunikation mit einem externen Gerät, eine Schnittstelle zur Datenkommunikation mit einem externen Netzwerk und/oder eine Schnittstelle zur drahtlosen Datenkommunikation umfassen. Diese Schnittstellen können es erlauben, dem Baufahrzeug von außen Daten zuzuführen. Da die Schnittstellen in dem externen Netzwerkbereich vorgesehen sind, ist der interne Netzwerkbereich durch die Firewall vor über diese Schnittstellen eingebrachten schädlichen Daten, beispielsweise Computerviren oder ähnlichem, geschützt.

Effizienterweise kann die Firewall auf einer Platine der Recheneinheit ausgebildet sein. Dazu ist zu bemerken, dass die Firewall dennoch einen eigenen Prozessor und ein eigenes Betriebssystem aufweist und sich lediglich zur besseren Bauraumausnutzung und effizienteren Herstellbarkeit auf der Platine der Recheneinheit befindet. Es wäre alternativ auch denkbar, die Firewall als physisch externes Gerät anzuschließen.

Vorzugsweise ist eine Software der Firewall dazu konfiguriert, unabhängig von der Recheneinheit aktualisiert zu werden. Eine solche Aktualisierung kann beispielsweise über eine an der Firewall direkt oder in dem externen Netzwerkbereich vorgesehene Schnittstelle erfolgen. Ein eigenständiges Aktualisieren der Software der Firewall ist aufgrund der geringen Datenmengen schnell durchführbar. Zudem entfällt ein aufwändiges Testen auf der Recheneinheit.

Bei der die Recheneinheit kann es sich insbesondere um einen Zentralrechner des Baufahrzeugs handeln.

Im Folgenden soll die Erfindung anhand von Ausführungsbeispielen unter Bezugnahme auf die Figuren näher erläutert werden. Dabei zeigt
- Figur 1: ein als Straßenfertiger ausgebildetes Baufahrzeug gemäß einer Ausführungsform;
- Figur 2: ein als Beschickerfahrzeug für einen Straßenfertiger ausgebildetes Baufahrzeug gemäß einer Ausführungsform; und
- Figur 3: ein als Blockdiagramm dargestelltes Netzwerkschema eines Baufahrzeugs gemäß einer Ausführungsform.

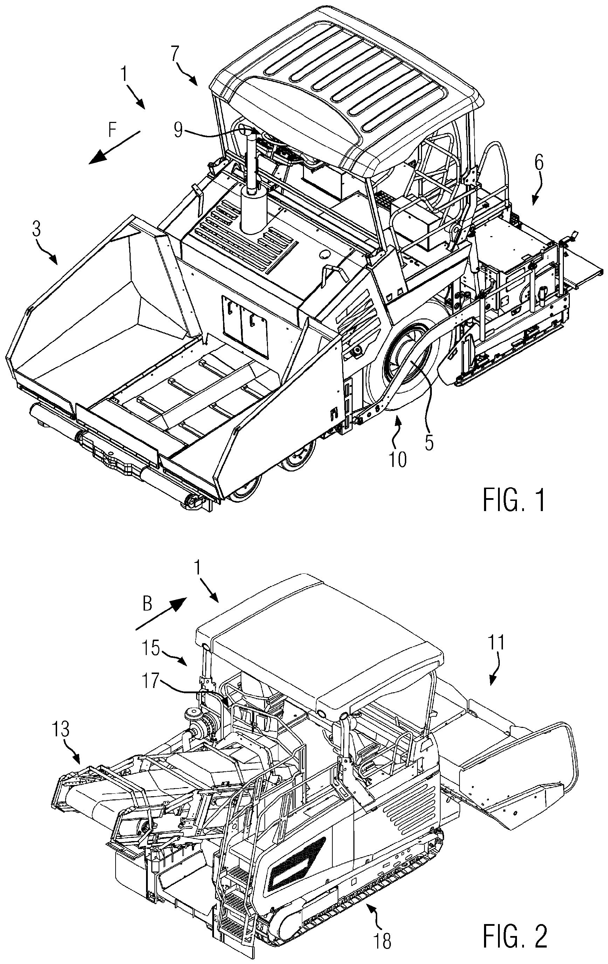

Das erfindungsgemäße Baufahrzeug 1 kann als Straßenfertiger oder als Beschickerfahrzeug ausgebildet sein. Figur 1 zeigt eine schematische Ansicht eines als Straßenfertiger ausgebildeten Baufahrzeugs 1. Der Straßenfertiger umfasst einen bezüglich einer Einbaufahrtrichtung F vorne gelegenen Gutbunker 3 zur Aufnahme von Einbaugut. Das Einbaugut wird während eines Einbauvorgangs entgegen der Einbaufahrtrichtung F in einen hinteren Bereich des Straßenfertigers gefördert, wo es einer an Zugholmen 5 hinter dem Straßenfertiger hergezogenen Einbaubohle 6 zum Verdichten vorgelegt wird. Die Einbaubohle 6 umfasst zum Verdichten des Einbauguts Verdichtungsaggregate, wie beispielsweise einen Vibrationsantrieb und eine Tamperleiste. Auf einem Bedienstand 7 des Straßenfertiger sind Bedieneinrichtungen 9 angeordnet, über die ein Bediener Maschinenfunktionen des Straßenfertigers, wie beispielsweise einen Fahrantrieb 10 oder die Verdichtungsaggregate, steuern kann.

Figur 2 zeigt eine Ausführung des erfindungsgemäßen Baufahrzeugs 1 als Beschickerfahrzeug für einen Straßenfertiger. Das Beschickerfahrzeug ist dazu ausgelegt, einen Straßenfertiger durch Befüllen des Gutbunkers 3 des Straßenfertigers mit Einbaugut zu versorgen. Dies kann insbesondere während einer Einbaufahrt geschehen, indem das Beschickerfahrzeug vor dem Straßenfertiger herfährt, während es dessen Gutbunker 3 befüllt. Das Beschickerfahrzeug umfasst bezüglich einer Beschickerfahrtrichtung B vorne einen Aufnahmebunker 11 zur Aufnahme von Einbaugut, beispielsweise von Einbaugut von einen anliefernden LKW. Das Einbaugut wird entgegen der Beschickerfahrtrichtung B in einen hinteren Bereich des Beschickerfahrzeugs gefördert, von wo es mittels einer Fördereinrichtung 13 des Beschickerfahrzeugs in den Gutbunker 3 des hinter dem Beschickerfahrzeugs fahrenden Straßenfertigers verbracht wird. Auf einem Bedienstand 15 des Beschickerfahrzeugs sind Bedieneinrichtungen 17 vorgesehen, mit denen ein Bediener Maschinenfunktionen des Beschickerfahrzeugs, beispielsweise einen Fahrantrieb 18, steuern kann.

Das Baufahrzeug 1 umfasst, sowohl in seiner Ausbildung als Straßenfertiger als auch in seiner Ausbildung als Beschickerfahrzeug, eine Recheneinheit 19 zur Steuerung eines Betriebs des Baufahrzeugs 1. In der dargestellen Ausführungsform ist die Recheneinheit 19 als Zentralrechner des Baufahrzeugs 1 ausgebildet. Die Recheneinheit 19 kann mit den Bedieneinrichtungen 9, 17 auf den Bedienstand 7, 15 des Baufahrzeugs 1 verbunden sein, um Benutzeranweisungen zu empfangen. Die Recheneinheit 19 kann Teil einer Maschinensteuerung des Baufahrzeugs 1 zur Steuerung und/oder Regelung einzelner Arbeitskomponenten des Baufahrzeugs 1 sein. Im Falle eines Straßenfertigers kann die Recheneinheit 19 beispielsweise den Fahrantrieb 10, Materialfördereinrichtungen des Straßenfertigers und Verdichtungsaggregate der Einbaubohle 6 steuern. Im Falle eines Beschickerfahrzeugs kann die Recheneinheit 19 beispielsweise den Fahrantrieb 18 und den Betrieb der Fördereinrichtung 13 steuern.

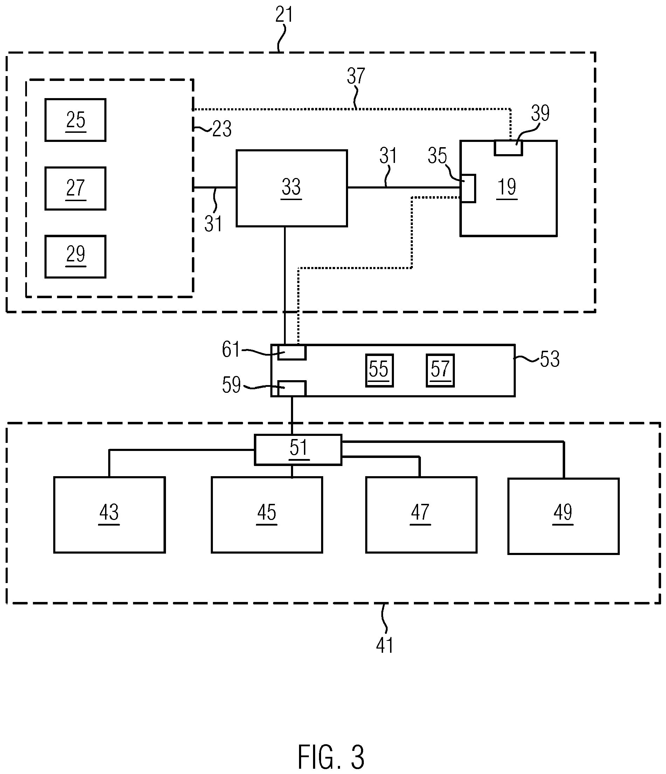

Um einzelne Komponenten und Funktionen des Baufahrzeugs 1 besser untereinander abzustimmen und zu vernetzen und gegebenenfalls auch die Verwendung von extern bezogenen Daten zuzulassen, ist die Recheneinheit 19 in ein Netzwerksystem der Baumaschine 1 integriert. Figur 3 zeigt als schematisches Blockschaltbild einen Aufbau der Netzwerkarchitektur des Baufahrzeugs 1. Das Netzwerk des Baufahrzeugs 1 umfasst einen internen Netzwerkbereich 21, der auch die Recheneinheit 19 umfasst. In der gezeigten Ausführungsform umfasst der interne Netzwerkbereich 21 zudem ein internes Baufahrzeug-Netzwerk 23, welches eine Vielzahl von Netzwerkteilnehmern aufweisen kann. Beispielsweise könnten Sensoreinrichtungen 25 des Baufahrzeugs 1 Teil des internen Baufahrzeug-Netzwerks sein. Auch dezentrale Steuereinrichtungen 27 könnten zur gegenseitigen Koordination und/oder zum Bereitstellen von Daten für den Bediener oder eine Betriebsdatenerfassung Teil des internen Baufahrzeug-Netzwerks 23 sein. Ebenso wäre es denkbar, dass beispielsweise Datenspeichereinrichtungen 29 des Baufahrzeugs 1 Teil des internen Baufahrzeug-Netzwerks 23 sind, um beispielsweise von dem Baufahrzeug 1 gesammelte Daten zentral speichern zu können oder Daten für den Betrieb des Baufahrzeugs 1 oder zur Einsicht durch einen Bediener bereitzustellen. Das interne Baufahrzeug-Netzwerk 23 kann, wie in Figur 3 durch die Netzwerkverbindungen 31 dargestellt, über einen Switch 33 mit einer Netzwerkschnittstelle 35 der Recheneinheit 19 verbunden sein. Alternativ wäre es auch denkbar, dass das interne Baufahrzeug-Netzwerk 23 über eine in Figur 3 gestrichelt dargestellte Netzwerkverbindung 37 direkt mit einer Netzwerkschnittstelle 39 der Recheneinheit 19 verbunden ist.

Der interne Netzwerkbereich 21 des Baufahrzeugs 1 umfasst vorzugsweise Netzwerkteilnehmer, die nicht notwendigerweise direkt mit von außerhalb des Baufahrzeugs 1 zugeführten Daten versorgt werden müssen. Vorzugsweise ist der interne Netzwerkbereich 21 in sich geschlossen und stellt somit einen in sich sicheren Netzwerkbereich 21 dar. Insbesondere ist es vorteilhaft, wenn sicherheitskritische Systembereiche, wie beispielsweise die Recheneinheit 19, in dem internen Netzwerkbereich 21 vorgesehen sind.

Das Baufahrzeug 1 umfasst zudem einen von dem internen Netzwerkbereich 21 getrennt vorliegenden externen Netzwerkbereich 41. Der externe Netzwerkbereich 41 umfasst vornehmlich Netzwerkteilnehmer, die zur Datenkommunikation mit externen Systemen vorgesehen sind oder eine solche Datenkommunikation betreiben. Beispielsweise kann der externe Netzwerkbereich 41 eine Schnittstelle 43 zur Datenkommunikation mit einem externen Speichermedium, beispielsweise einem USB-Stick, einer Festplatte, einer IC-Karte oder ähnlichem, eine Schnittstelle 45 zur Datenkommunikation mit einem externen Gerät, beispielsweise einem Tablet oder Smartphone oder einem anderen Eingabegerät, eine Schnittstelle 47 zur Verbindung mit einem externen Netzwerkbereich, insbesondere einem externen Baustellennetzwerk oder dem Internet, und/oder eine Schnittstelle 49 zur drahtlosen Datenkommunikation, beispielsweise ein WLAN-Modul, aufweisen. Die entsprechenden Netzwerkteilnehmer 43, 45, 47, 49 des externen Netzwerkbereichs 41 können insbesondere jeweils eine eigene Steuerung aufweisen. Die einzelnen Netzwerkteilnehmer 43, 45, 47, 49 des externen Netzwerkbereichs 41 können optional über einen Switch 51 des externen Netzwerkbereichs 41 miteinander verbunden sein.

Wie in Figur 3 dargestellt, sind der interne Netzwerkbereich 21 und der externe Netzwerkbereich 41, die ansonsten als getrennte Netzwerkbereiche vorliegen, über eine Firewall 53 miteinander verbunden. Die Firewall 53 ist dazu konfiguriert, eine Datenkommunikation von dem externen Netzwerkbereich 41 des Baufahrzeugs 1 an den internen Netzwerkbereich 21 des Baufahrzeugs 1 zu überwachen. Die Firewall 53 ist als Hardware-Firewall ausgebildet und umfasst einen eigenen Prozessor 55 und eine Speichereinheit 57 zum Speichern von Programminstruktionen und einem eigenen Betriebssystem der Firewall 53. Insbesondere kann die Speichereinheit 57 Software und/oder Firmware der Firewall 53 speichern. Um Einbauraum einzusparen und eine Herstellung zu vereinfachen, kann die Firewall 53 auf einer Platine der Recheneinheit 19 ausgebildet sein. Es ist aber zu beachten, dass die Firewall 53 dennoch unabhängig von dem System der Recheneinheit 19 läuft. Die Firewall 53 kann eine auf der Speichereinrichtung 57 gespeicherte Software mit Regeln zur Datenüberwachung umfassen, um verdächtige Datenpakete in der Kommunikation aus dem externen Netzwerkbereich 41 an den internen Netzwerkbereich 21 herauszufiltern und so den internen Netzwerkbereich 21 vor unerwünschten Netzwerkzugriffen zu schützen.

Der externe Netzwerkbereich 41 ist, im gezeigten Ausführungsbeispiel über den Switch 51 des externen Netzwerkbereichs 41, an eine als Eingang 59 der Firewall 53 ausgebildete Schnittstelle der Firewall 53 angeschlossen. Über eine als Ausgang 61 der Firewall 53 ausgebildete Schnittstelle der Firewall 53 werden von dem externen Netzwerkbereich 41 gesendete Daten nach einem Überprüfen und gegebenenfalls Filtern durch die Firewall 53 an den internen Netzwerkbereich weitergeleitet.

Besonders bevorzugt ist es, wenn der Ausgang 61 der Firewall 53 an den Switch 33 des internen Netzwerkbereichs 21 angeschlossen ist. So können das interne Baufahrzeugnetzwerk 23 und der externe Netzwerkbereich 41 (nach Durchlaufen der Firewall 53) zusammengeführt werden und dann über eine einzige Netzwerkschnittstelle 35 der Recheneinheit 19 mit der Recheneinheit 19 verbunden werden. Dies kann Netzwerkschnittstellen 35, 39 an der Recheneinheit 19 einsparen.

Alternativ wäre es aber auch denkbar, den Ausgang 61 der Firewall 53 direkt an eine Netzwerkschnittstelle 35 der Recheneinheit 19 anzuschließen (in Figur 3 mit gepunkteten Linien dargestellt).

Vorzugsweise lässt sich die Software der Firewall 53 unabhängig von der Recheneinheit 19 aktualisieren. Aktualisierte Software für die Firewall 53 kann beispielsweise über eine der Schnittstellen 43, 45, 47, 49 des externen Netzwerkbereichs 41 zugeführt werden.

## Patentansprüche

1. Baufahrzeug (1), bei dem es sich um einen Straßenfertiger oder um ein Beschickerfahrzeug für einen Straßenfertiger handelt, umfassend:
einen Fahrantrieb (10, 18) zum Bereitstellen einer Fahrfunktion des Baufahrzeugs (1);
einen internen Netzwerkbereich (21) des Baufahrzeugs (1), welcher eine Recheneinheit (19) zur Steuerung eines Betriebs des Baufahrzeugs (1) umfasst;
einen externen Netzwerkbereich (41) des Baufahrzeugs (1), welcher in Datenkommunikationsverbindung mit dem internen Netzwerkbereich (21) steht,
**gekennzeichnet durch**
eine Firewall (53), die dazu konfiguriert ist, eine Datenkommunikation von dem externen Netzwerkbereich (41) des Baufahrzeugs (1) an den internen Netzwerkbereich (21) des Baufahrzeugs (1) zu überwachen, wobei die Firewall (53) einen eigenen Prozessor (55) und ein eigenes Betriebssystem aufweist.

2. Baufahrzeug nach Anspruch 1, wobei der externe Netzwerkbereich (41) an einen Eingang (59) der Firewall (53) angeschlossen ist.

3. Baufahrzeug nach Anspruch 1 oder 2, wobei ein Ausgang (61) der Firewall (53) mit einer Netzwerkschnittstelle (35, 39) der Recheneinheit (19) verbunden ist.

4. Baufahrzeug nach Anspruch 1 oder 2, wobei ein Ausgang (61) der Firewall (53) mit einem Switch (33) verbunden ist, der Teil des internen Netzwerkbereichs (21) ist und der mit einer Netzwerkschnittstelle (35, 39) der Recheneinheit (19) verbunden ist.

5. Baufahrzeug nach Anspruch 4, wobei zudem ein internes Baufahrzeug-Netzwerk (23), welches Teil des internen Netzwerkbereichs (21) ist, mit dem Switch (33) verbunden ist.

6. Baufahrzeug nach einem der vorangehenden Ansprüche, wobei der interne Netzwerkbereich (21) des Baufahrzeugs (1) eine Maschinensteuerung des Baufahrzeugs (1) umfasst.

7. Baufahrzeug nach einem der vorangehenden Ansprüche, wobei der externe Netzwerkbereich (41) des Baufahrzeugs (1) eine Schnittstelle (43) zur Datenkommunikation mit einem externen Speichermedium, eine Schnittstelle (45) zur Datenkommunikation mit einem externen Gerät, eine Schnittstelle (47) zur Datenkommunikation mit einem externen Netzwerk und/oder eine Schnittstelle (49) zur drahtlosen Datenkommunikation umfasst.

8. Baufahrzeug nach einem der vorangehenden Ansprüche, wobei die Firewall (53) auf einer Platine der Recheneinheit (19) ausgebildet ist.

9. Baufahrzeug nach einem der vorangehenden Ansprüche, wobei eine Software der Firewall (53) dazu konfiguriert ist, unabhängig von der Recheneinheit (19) aktualisiert zu werden.

10. Baufahrzeug nach einem der vorangehenden Ansprüche, wobei die Recheneinheit (19) als Zentralrechner des Baufahrzeugs (1) ausgebildet ist.

## Claims

1. Construction vehicle (1) which is a road finisher or a feeder vehicle for a road finisher, comprising:
a drive (10, 18) for providing a drive function of the construction vehicle (1);
an internal network area (21) of the construction vehicle (1), the internal network area (21) comprising a computing unit (19) for controlling an operation of the construction vehicle (1);
an external network area (41) of the construction vehicle (1), the external network area (41) being in data communication connection with the internal network area (21),
**characterized by**
a firewall (53) configured to monitor data communication from the external network area (41) of the construction vehicle (1) to the internal network area (21) of the construction vehicle (1), wherein the firewall (53) has its own processor (55) and its own operating system.

2. Construction vehicle according to claim 1, wherein the external network area (41) is connected to an input (59) of the firewall (53).

3. Construction vehicle according to claim 1 or 2, wherein an output (61) of the firewall (53) is connected to a network interface (35, 39) of the computing unit (19).

4. Construction vehicle according to claim 1 or 2, wherein an output (61) of the firewall (53) is connected to a switch (33) which is part of the internal network area (21) and which is connected to a network interface (35, 39) of the computing unit (19).

5. Construction vehicle according to claim 4, wherein in addition an internal construction vehicle network (23), which is part of the internal network area (21), is connected to the switch (33).

6. Construction vehicle according to one of the preceding claims, wherein the internal network area (21) of the construction vehicle (1) comprises a machine controller of the construction vehicle (1).

7. Construction vehicle according to one of the preceding claims, wherein the external network area (41) of the construction vehicle (1) comprises an interface (43) for data communication with an external storage medium, an interface (45) for data communication with an external device, an interface (47) for data communication with an external network and/or an interface (49) for wireless data communication.

8. Construction vehicle according to one of the preceding claims, wherein the firewall (53) is formed on a circuit board of the computing unit (19).

9. Construction vehicle according to one of the preceding claims, wherein a software of the firewall (53) is configured to be updated independently of the computing unit (19).

10. Construction vehicle according to one of the preceding claims, wherein the computing unit (19) is designed as a central computer of the construction vehicle (1).

## Revendications

1. Engin de chantier (1), en particulier finisseur ou chargeur pour finisseur, comprenant :
un système de propulsion (10, 18) pour procurer une fonction de propulsion de l'engin de chantier (1) ;
une zone de réseau interne (21) de l'engin de chantier (1), qui comporte une unité de calcul (19) pour la commande du fonctionnement de l'engin de chantier (1) ;
une zone de réseau externe (41) de l'engin de chantier (1), qui est en liaison de communication de données avec la zone de réseau interne (21),
**caractérisé par**
un pare-feu (53) configuré pour surveiller une communication de données de la zone de réseau externe (41) de l'engin de chantier (1) vers la zone de réseau interne (21) de l'engin de chantier (1), dans lequel le pare-feu (53) comporte un processeur propre (55) et un système d'exploitation propre.

2. Engin de chantier selon la revendication 1, dans lequel la zone de réseau externe (41) est connectée à une entrée (59) du pare-feu (53) .

3. Engin de chantier selon la revendication 1 ou 2, dans lequel une sortie (61) du pare-feu (53) est connectée à une interface réseau (35, 39) de l'unité de calcul (19).

4. Engin de chantier selon la revendication 1 ou 2, dans lequel une sortie (61) du pare-feu (53) est connectée à un interrupteur (33) qui fait partie de la zone de réseau interne (21) et est connecté à une interface réseau (35, 39) de l'unité de calcul (19).

5. Engin de chantier selon la revendication 4, dans lequel un réseau d'engin de chantier interne (23) qui fait partie de la zone de réseau interne (21) est en outre connecté à l'interrupteur (33).

6. Engin de chantier selon l'une des revendications précédentes, dans lequel la zone de réseau interne (21) de l'engin de chantier (1) comporte une commande de machine de l'engin de chantier (1).

7. Engin de chantier selon l'une des revendications précédentes, dans lequel la zone de réseau externe (41) de l'engin de chantier (1) comporte une interface (43) de communication de données avec un support de stockage externe, une interface (45) de communication de données avec un appareil externe, une interface (47) de communication de données avec un réseau externe, et/ou une interface (49) de communication de données sans fil.

8. Engin de chantier selon l'une des revendications précédentes, dans lequel le pare-feu (53) est installé sur un circuit imprimé de l'unité de calcul (19).

9. Engin de chantier selon l'une des revendications précédentes, dans lequel un logiciel du pare-feu (53) est configuré pour pouvoir être actualisé indépendamment de l'unité de calcul (19).

10. Engin de chantier selon l'une des revendications précédentes, dans lequel l'unité de calcul (19) est constituée comme l'ordinateur central de l'engin de chantier (1) .
